# EUROPEAN PATENT APPLICATION

(11) **EP 0 716 872 A1**
(43) Date of publication of application: **19.06.1996**
(21) Application number: 95830510.4
(22) Date of filing: 11.12.1995
(51) Int. Cl.: B01D 50/00, F24C 15/20

(54) **Air purifier using water as cleaning fluid**

(30) Priority: 14.12.1994 IT RG940008
(71) Applicant: Iacono, Giovanna, Ragusa (IT)
(72) Inventor: Iacono, Giovanna, Ragusa (IT)

(57) **Abstract**

This water powered air purifier completes the filtering action of aspiration system in kitchens in the catering industry.

It eliminates the oily vapours present in the aspirated air, before it is expelled outside.

It considerably reduces pollution to the environment.

I combine two filtering actions which already, separately, exist: air filtering (from dust) done in silos using centrifugal force and the water film used in varnishing cabins.

These two principles are united in a silo of contained proportions, whose walls are covered by a film of water obtained with a simple running water system.

The air is forced by its movement, the cylindric shape and the centrifugal force onto the silo wall.

The water film catches the particles of oily vapour and forces them down.

At the end of the set course, the purified air is expelled out, without damage to the environment.

Water and oil can be discharged separately.

## Description

### Technical Field

My invention relates to the field of air purifiers; particularly to the air purifiers used in the aspiration systems of kitchens in the small and large catering industries.

### Background Art

This field has been relatively neglected until now.

Yet acid and oily residues contained in the air expelled from restaurant kitchens, fried food shops, fast food shops etc. are a cause of damage to the environment:
in fact these residues cause damage to buildings, to historical and artistic monuments and, cause a nuisance to people.

Up to now this problem has been dealt with by complex and expensive filters: electrostatic filters, active carbon filters, mechanical barrier filters etc, all these devices reduce the problem but have a high cost to the operators and to the environment:
the commonly used active carbons are, for example, a problem, not only as regards the cost but also because they should be treated as special waste products.

These filters need periodic replacement, they get obstructed and become inefficient in a few months and, as a matter of fact, most people never replace them.

### Disclosure of the invention

The novelty of this air purifier consists in the extreme simplicity of the purifying mechanism, in fact water is used to wash the air.

The air is forcibly pushed into an environment where it comes into contact with a water film flowing onto the walls.

In this way the oily/acid particles, and the residues of vapour carried by the air, are caught by the water and only clean air will be expelled outside.

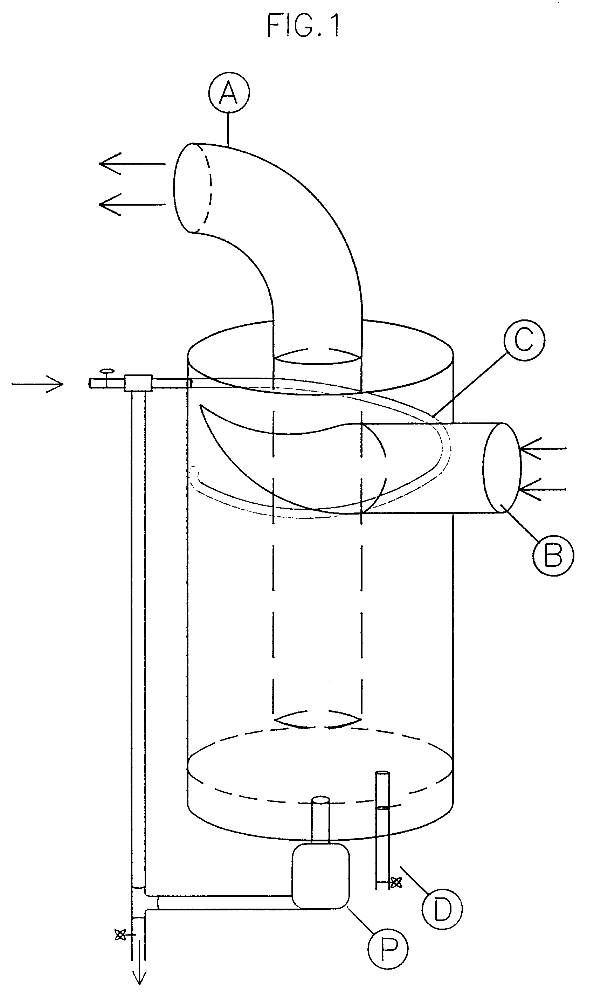

The diagram (fig.1) shows the way how the -water powered air purifier - purifies the air
The air coming from the inspiration system enters the silo via the side tube (B) at a tangent to the cylinder wall.

The air, due to the thrust received from the aspiration system and to the cylindrical form of the silo, will circulate against the cylindrical walls and, only at the bottom of it, after touching the water surface, will find its way out via the pipe (A) (located centrally within the cylinder and with its bottom part a few centimetres up from the water surface).

The particles of oil, smoke, oily/greasy vapour present in the air, not trapped by the filter of a cooker hood are forced by the centrifugal force to lap onto the silo wall where the running water will catch them and carry them to the bottom of the cylinder.

At the end of this run the air, without its oily residual products, will find an exit via the central pipe (A) and will reach the outside without damaging the environment or polluting the atmosphere.

To use such a filter, in addition to the normal inspiration systems, will greatly help in those cases where,restaurants, fast food shops, fried food establishments, canteens, etc. cause nuisance to people, damage to the buildings pollution to the atmosphere and environment.

Moreover the air without its oily/acid residual products when washed and purified will not pollute and, its bad smells will be drastically reduced.

A further advantage to purifying the air by water will result from the possibility of discharging the washing water, in fact it will be possible to separate the oil, which due to its specific gravity floats to the surface, from the water itself and discharge both separately (if desired); the oil with the used oil - and the water in the sewer pipe, without polluting.

One can easily understand that such a very simple system could solve the big problem of the purification of the air.

This problem has been dealt with up to now by filter which are much more complex and expensive and for these reasons not accessible to the majority of cafè/restaurant/fast-food/shop owner etc, which are indeed the ones that may cause, particularly in the inner cities/towns, nuisance to people or damage to the environment.

### Description of the drawing (fig. 1)

An stainless steel cylinder with a side pipe (B) for the air coming in from aspiration system. This pipe is connected at a tangent to the silo wall.

A central pipe (A) takes the clean air out after the purification, the lower end of this tube (A) is situated a few centimetres from the water surface and, can be connected directly to the outside.

The air purifier system is made up of:
1) a tap for clean water coming in, the water is distributed along the silo inner wall by a pipe (C) which goes around the wall starting from the top, the pipe (C) makes its helicoidal way to the bottom of the connection between the pipe (B) and the cylinder, to avoid water spills from the pipe.

The wall of the silo are covered by a film of water running out of holes distributed along the pipe (C).

The water running on the wall is collected at the bottom of the cilinder, where there is a tap and a "over flow" (D) to maintain the water level.

A small electric pump (P) can be inserted to the pipe connection between the way-out and way-in waterways, to recycle the water into the pipe (C).

Or, after sedimentation there is the possibility of the separate-discharge of the water from its way-out pipe and the oil via the over flow.

## Claims

I want to patent the combinations of two different filtering principles which already separately exist and are used in different fields.

The two principles are united in a air purifier to resolve the problem of the purification of air that comes out of restaurant kitchens, fast food shops, fried food shops, etc.

The air purifier will be of different sizes, proportionate to the foreseen use.

I use the combination of a silo, already utilised to filter dust and, the principle of the water film used in varnishing cabins.

1. I want to patent this combination: the silo in fact, with a film of water running over its walls becomes a purifier which purifies the air from the oily vapours.
The cylindrical shape of the silo allows the best performance in comparison to other shapes, because it forces the air into a circular movement which produces the centrifugal force and pushes the particles suspended in the air against the silo wall.
The water film covering the wall catches the particles and takes them to the bottom of the silo, into the decanted water.
The simplicity of the mechanism, combined with its great efficiancy represents the real novelty.

2. I want to protect the combination of the principle of the water film together with the principle of the obligatory course of the air which runs towards the same water film within the purifier.
I chose the cylindrical shape to specifically make use of the centrifugal force, which develops within cylinder and gives more efficiency, but other simples shapes may be used, for simpler, cheaper filters.
The water and the oil can be discharged separately, if desired, this is another advantage, because it avoids water pollution and, the oil can be discharged together with other oily waste.
This filter is simple in its mechanism, is easy to install and to use and does not require maintenance apart from replacement of the water.
It can be equipped, if desired, with a dispenser for additives, with a mechanism for the self-replacement of the water and for the separate draining of the oil, so it will not be necessary to do these operations by hand.
However the basic mechanism remains the same: simple, efficient and cheap, and so accessible to everyone.
It noticably reduces the nuisance to people, because also the bad smells are reduced, and the pollution to the environment.
